Europäisches Patentamt

**European Patent Office**

Office européen des brevets

(11) Numéro de publication: **0 154 606**
**B1**

(12) **FASCICULE DE BREVET EUROPEEN**

(45) Date de publication du fascicule du brevet:
08.11.89

(21) Numéro de dépôt: 85810071.2

(22) Date de dépôt: 22.02.85

(51) Int. Cl.⁴: **B 06 B 1/04**, B 06 B 1/14

(54) Dispositif de déplacement de pièces par oscillations pour installation de traitement de surface.

(30) Priorité: 05.03.84 CH 1075/84

(43) Date de publication de la demande:
11.09.85 Bulletin 85/37

(45) Mention de la délivrance du brevet:
08.11.89 Bulletin 89/45

(84) Etats contractants désignés:
AT BE CH DE FR GB IT LI LU NL SE

(56) Documents cités:
CH-A- 594 072
DE-A- 2 532 547
US-A- 2 662 851
US-A- 2 760 504
US-A- 3 207 293

(73) Titulaire: **Osci-Galvano SA, Rue des Uttins 34,**
**CH-1400 Yverdon (CH)**

(72) Inventeur: **Schopfer, Pierre-André, Marinière 69,**
**CH-2068 Hauterive (CH)**
Inventeur: **Richard, Francis, Grand-Rue 10,**
**CH-2000 Neuchâtel (CH)**

(74) Mandataire: **North, Mathieu, Rue du Puits-Godet 22,**
**CH-2001 Neuchâtel (CH)**

ACTORUM AG

## Description

La présente invention concerne un dispositif permettant de déplacer des pièces dans un récipient ou bol sur une rampe inclinée à l'aide de vibrations de rotation, communiquées au récipient par un moteur électromagnétique.

De tels dispositifs sont bien connus dans l'industrie, en général sous le nom de vibreurs, par exemple comme moyen d'approvisionnement en pièces, de préférence mais non exclusivement de petites dimensions, de machines-outils. Les pièces se trouvant au fond du récipient gravissent la rampe, de forme généralement hélicoïdale, jusqu'au poste de travail sur la machine à l'aide des vibrations du récipient.

Dans d'autres applications, les pièces retombent au fond du panier et gravissent à nouveau la rampe, circulant ainsi en circuit fermé. C'est le cas par exemple lorsque les pièces doivent circuler dans un liquide traitant.

L'application principale, mais non la seule, envisagée pour le dispositif selon l'invention concerne essentiellement les installations de traitement de surface. Le dispositif, comprenant un récipient et un moteur vibrant, a alors pour fonction de brasser les pièces déposées dans le récipient. Ces pièces, après avoir gravi la rampe, retombent ensuite au fond du récipient pour recommencer le même cycle quelques instants plus tard. Ce dispositif remplace ainsi avantageusement le tonneau, bien connu dans les installations de galvanoplastie conventionnelles, en assurant un brassage plus régulier.

Une installation de traitement de surface comprend essentiellement une ou plusieurs cuves contenant des bains, un récipient dans lequel sont déposées les pièces à traiter et dont il doit assurer le brassage, des moyens pour remplacer les bains dans les cuves et enfin, éventuellement, des moyens pour déplacer le récipient d'une cuve dans une autre.

Les dispositifs habituellement utilisés dans ce genre d'installations sont construits de façon que le récipient se trouve placé au-dessus du moteur. C'est par exemple le cas de l'installation de galvanoplastie à une seule cuve décrite dans le brevet CH 594072. Dans cette réalisation, le vibreur est solidaire de la cuve et il est disposé de façon que le récipient, placé au centre et à l'intérieur de la cuve, se trouve au-dessus du moteur, situé à l'extérieur. La transmission du mouvement du moteur au récipient est faite à l'aide d'un axe traversant la paroi de la cuve. Il est évident que cette construction pose un problème d'étanchéité difficile à résoudre, avec des liquides corrosifs, à l'endroit où l'axe traverse la cuve. De plus, la liaison rigide entre le vibreur et la cuve restreint les possibilités d'utilisation de l'installation.

Pour une installation à plusieurs cuves, chaque cuve sera pourvue d'un dispositif dans ce type de réalisation. C'est évidemment une solution coûteuse et peu pratique, car le transfert des pièces nécessitera de détacher, chaque fois, le récipient du moteur.

Une solution particulièrement intéressante pour les installations à plusieurs cuves serait de considérer le vibreur et le récipient comme une unité autonome, pouvant être déplacée par des moyens appropriés d'une cuve dans une autre au cours du cycle de traitement des pièces.

Une telle solution présente un grand intérêt. Elle exige alors que le moteur soit placé au-dessus du récipient, et non au-dessous. En effet, si le moteur est placé au-dessous du récipient, il faudra alors protéger efficacement le moteur contre le liquide dans lequel il vient tremper en même temps que le récipient. La présence du moteur a également l'inconvénient que ce dernier occupe beaucoup de place dans la cuve et entraîne la nécessité de donner à cette dernière de grandes dimensions.

Un dispositif de ce genre a été proposé dans le brevet US 2 760 504 Spurlin, qui présente un récipient à rampe hélicoïdale dont l'axe, qui est vertical, est suspendu à un moteur vibrant. L'axe, placé au centre de la rampe, présente à son extrémité supérieure une partie magnétisable placée à faible distance au-dessous d'un noyau magnétique entouré d'une bobine. Ce noyau magnétique est lui-même fixé à une base, en forme de plaque horizontale, qui se trouve au-dessus de lui. L'axe, solidaire de la rampe hélicoïdale, est lui-même fixé à une armature circulaire, qui est suspendue par des ressorts à lames obliques à la base à laquelle est fixé le noyau magnétique. L'axe étant placé au centre, de même que le noyau magnétique, les ressorts sont eux-mêmes disposés circulairement autour d'eux. La base, qui se trouve au sommet du dispositif, présente un crochet. Le récipient à rampe hélicoïdale est plongé dans une cuve, qui peut être remplie d'un liquide, par exemple de nettoyage. Il est possible de soulever l'ensemble du dispositif au moyen d'une grue qui saisit le crochet fixé sur la base, de façon à extraire le récipient à rampe hélicoïdale de la cuve. La base présente, à gauche et à droite, des plots en matériau élastique permettant de poser le dispositif sur des rails horizontaux, qui sont placés de manière que le récipient à rampe hélicoïdale plonge dans la cuve au moment où les plots s'appuient sur les rails.

Si un tel dispositif présente sur ceux qui sont habituellement employés l'avantage de permettre le transport d'une cuve à l'autre, il présente des inconvénients sérieux.

Tout d'abord, le fait que le noyau magnétique soit placé au centre ne permet guère d'augmenter la puissance du moteur en plaçant plusieurs noyaux et bobines. Ensuite, le fait que le noyau soit placé au centre ne permet pas de donner à volonté à l'axe qui soutient le récipient à rampe hélicoïdale un mouvement de balancement, ce qui est possible si on utilise des noyaux magnétiques placés de part et d'autre de l'axe. De plus, le panier, de tout son poids, est suspendu aux ressorts, alors qu'on atteint une efficacité beaucoup plus grande de la vibration si la masse qui doit vibrer s'appuie sur les ressorts et si le noyau magnétique l'attire vers le bas, dans le sens de la force de gravité, plutôt que de l'attirer vers le haut, en sens contraire de la force de gravité. Enfin, le dispositif décrit dans le brevet US 2 765 104 présente un capot souple placé entre le bord de la cuve, ou des pièces fixes qui la soutiennent, et l'armature solidaire de l'axe à rampe hélicoïdale, afin d'assurer une certaine étanchéité. Il est en effet nécessaire que ce capot soit souple, du fait que la cuve et les pièces qui la soutiennent sont fixes, alors que l'armature, solidaire de l'axe et de la rampe hélicoïdale vibre sous l'action du moteur.

La présente invention vise à supprimer les inconvénients mentionnés plus haut, c'est-à-dire à fournir un dispositif permettant de déplacer des pièces dans un récipient sur une rampe inclinée à l'aide de vibrations de rotation, dans lequel il soit possible de placer plusieurs noyaux magnétiques excentrés, dans lequel l'action magnétique du moteur entraîne le récipient à rampe hélicoïdale en l'attirant vers le bas et non l'inverse, et qui n'exige pas la présence d'un capot souple entre la base fixe et le bord de la cuve.

A cet effet, le dispositif selon l'invention comprend, de manière connue, un récipient pourvu d'une rampe inclinée et apte à recevoir les pièces à traiter, un moteur électromagnétique oscillant, un axe reliant le récipient au moteur, des moyens de saisie du dispositif, des moyens de posage du dispositif et des bornes de contact électriques d'amenée de courant au moteur; le récipient est disposé en dessous du moteur.

Le dispositif selon l'invention est défini dans les revendications.

Les dessins annexés donnent, à titre explicatif mais nullement limitatif, une forme avantageuse de réalisation d'un tel dispositif ainsi qu'une installation de traitement de surface particulièrement bien adaptée à utiliser le dispositif selon l'invention. Sur ces dessins, où les mêmes références désignent les mêmes parties:

la fig. 1 est une vue en élévation du dispositif selon l'invention;

la fig. 2 est une vue en plan du même dispositif;

la fig. 3 est une vue en plan d'une cuve avec deux réservoirs, l'ensemble formant un module entrant dans la composition d'une installation de traitement de surface;

la fig. 4 est une vue de face et en coupe du module représenté sur la fig. 3;

la fig. 5 est une vue de profil et en coupe du même module; et

la fig. 6 est une vue en perspective d'une installation de traitement de surfaces formée de plusieurs modules et utilisant des dispositifs selon l'invention.

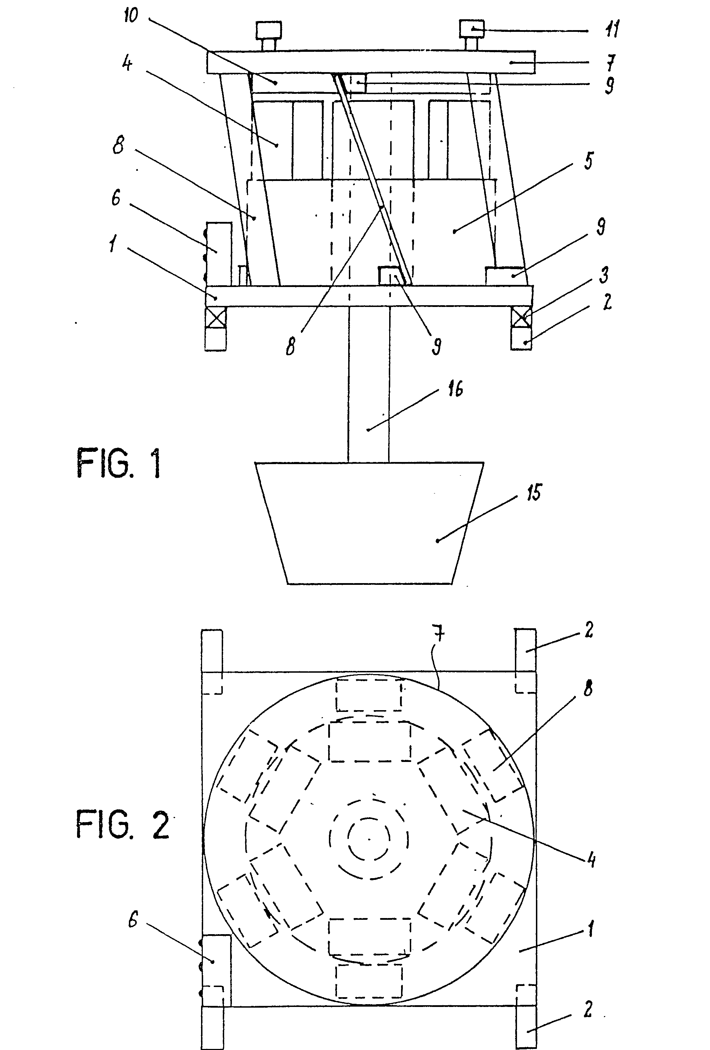

Les fig. 1 et 2 représentent en élévation et en plan une forme d'exécution du dispositif selon l'invention. Il comprend une plaque de base 1 massive, de forme carrée, réalisée en matériau magnétique. Lorsque le moteur est en fonctionnement, la plaque de base occupe une position horizontale. Deux rails de posage 2 sont reliés à la plaque de base 1 par l'intermédiaire de supports élastiques 3 permettant de filtrer les vibrations du moteur. Les rails de posage 2 permettent de placer le dispositif au-dessus d'une cuve sur un cadre prévu à cet effet, solidaire de l'installation. Sur la plaque de base 1, perpendiculairement à celle-ci et du côté opposé aux rails de posage 2, sont fixées six bobines 4 à l'aide d'un support de bobine 5. Chaque bobine est enroulée autour d'un noyau magnétique non représenté de même longueur que la bobine. Le nombre des bobines pourrait être différent de six. Enfin les bobines 4 sont alimentées en courant à partir d'une boîte de distribution électrique 6, fixée sur la plaque de base 1 et comprenant des bornes de contact.

Au-dessus des bobines 4 est disposée une plaque supérieure 7, de forme circulaire, réalisée en un matériau léger, tel que l'aluminium. Cette plaque est rendue solidaire de la plaque de base 1 au moyen de six lames de ressort identiques 8. Chaque lame de ressort est fixée obliquement sur chacune des plaques 1 et 7 à l'aide d'un étrier 9. La plaque supérieure 7 prend alors une position parallèle à la plaque de base 1. Une armature magnétique 10 fixée vis-à-vis des bobines 4 sur la plaque supérieure 7 permet de fermer le circuit magnétique formé par les noyaux des bobines 4 et la plaque de base 1. La longueur des lames de ressort 8 est choisie de façon qu'un faible espace, dit entrefer, soit ménagé entre les bobines 4 et l'armature magnétique 10, permettant à la plaque 7 d'effectuer des mouvements de rotation et de translation compatibles avec les liaisons imposées par les lames de ressort 8. La plaque supérieure 7 est encore pourvue, du côté opposé de l'armature magnétique 10, de crochets 11 permettant à un bras extérieur non représenté de saisir et de transporter le dispositif.

Les éléments 1 à 11 qui viennent d'être décrits et leur agencement, forment le moteur du dispositif. En dessous de ce moteur est fixé un récipient 15 à l'aide d'un axe 16 ancré au centre de la plaque supérieure 7. Le récipient 15 comprend une rampe inclinée non représentée et il est réalisé de préférence en matière plastique transparente, par exemple en polyvinyle, afin de permettre l'observation des pièces se trouvant à l'intérieur.

Le fonctionnement du dispositif est le suivant. Lorsqu'un même courant traverse les bobines 4, il en résulte une force d'attraction entre les noyaux des bobines et l'armature magnétique 10. De cette force résulte, grâce à l'action des lames de ressort 8, un mouvement de translation vertical et de rotation autour de l'axe 16 de la plaque supérieure 7 par rapport à la plaque de base 1, supposée immobile. Ce mouvement est naturellement transmis au récipient 15. Si le courant traversant les bobines est variable et périodique, le récipient sera animé d'un mouvement oscillatoire périodique également. Grâce à un choix convenable de la forme du courant, de son intensité et de sa fréquence, le récipient 15 pourra alors être animé d'un mouvement propice à faire gravir aux pièces la rampe inclinée et à assurer leur brassage.

Il a été constaté à la suite d'essais que le brassage des pièces pouvait être grandement amélioré en imprimant au récipient 15 un mouvement plus complexe que celui qui vient d'être décrit et dans lequel l'axe 16 reste toujours parallèle à lui-même. Ceci peut être obtenu en répartissant les bobines en un certain nombre de groupes, puis en excitant chaque groupe de bobines par un courant variable différent. Un groupe ne pourra comprendre, dans le cas extrême, qu'une seule bobine. Une solution intéressante consiste à former un groupe avec deux bobines contiguës, ce qui donne trois groupes distincts dans le cas de l'oscillateur représenté dans les dessins. En excitant les groupes de manière périodique de façon qu'à un instant donné il ne passe un courant que dans un seul groupe, alors l'axe 16, en plus du mouvement déjà décrit, aura également un mouvement de pivotement autour d'un point situé approximativement au centre de la plaque supérieure 7. Le récipient 15 sera alors animé du même mouvement, favorisant le brassage et le déplacement des pièces sur la rampe.

Bien entendu d'autres formes de réalisation du dispositif que celle donnée en exemple peuvent être utilisées sans sortir du cadre de l'invention.

Un exemple d'utilisation du dispositif selon l'invention dans une installation de traitement de surface sera maintenant donnée afin de mettre en évidence les avantages que l'on peut en tirer.

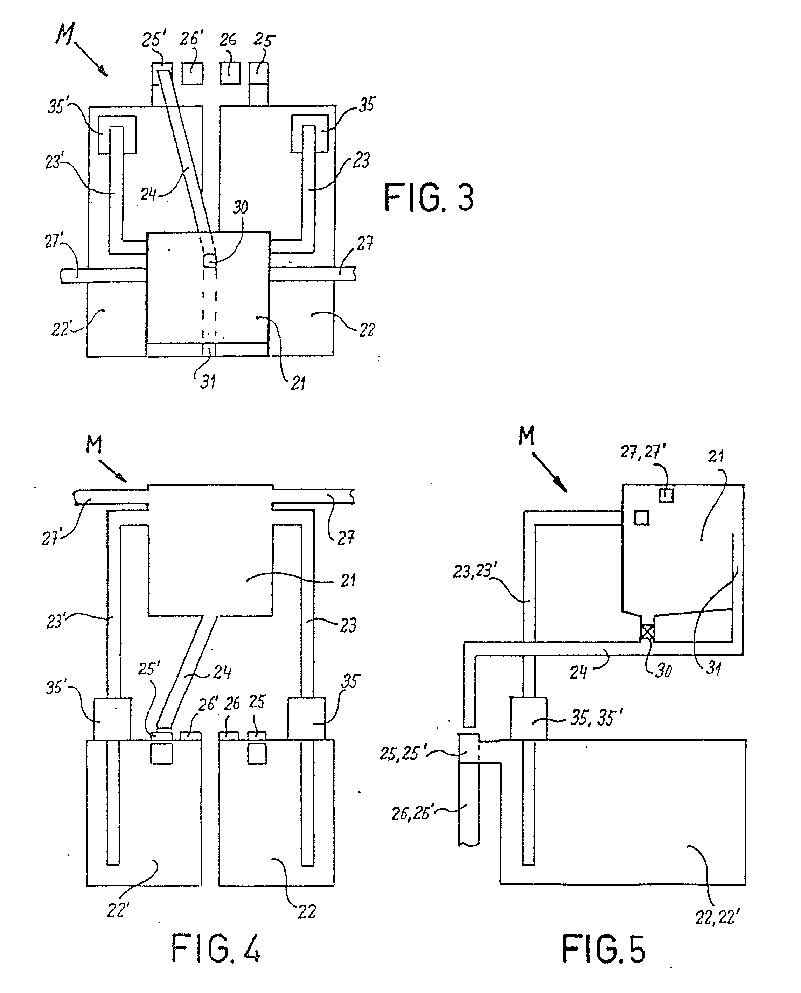

L'installation comprend un certain nombre de modules M et une forme d'exécution d'un tel module est représentée sur les fig. 3 à 5. Le module M comprend une cuve 21, deux réservoirs 22, 22', mais leur nombre pourrait être plus élevé, deux conduits de remplissage 23, 23', reliant la partie inférieure de chaque réservoir 22, 22 ', à la partie supérieure de la cuve 21, un conduit mobile 24, reliant la partie inférieure de la cuve 21 soit à un conduit de vidange 25 ou 25', situé à la partie supérieure de chaque réservoir 22, 22', soit à un conduit d'évacuation 26 ou 26', enfin deux conduits d'amenée 27, 27', mais leur nombre pourrait être plus élevé, aboutissant dans la cuve 21 au-dessus des conduits de remplissage 23, 23'.

Une vanne de vidange 30 permet, dans sa position ouverte, de mettre en communication le fond de la cuve 21 avec le conduit mobile 24 auquel est également relié un conduit de trop-plein 31, fixé à l'intérieur de la cuve 21. Les conduits de remplissage 23, 23', contiennent chacun une pompe 35, 35' et le déplacement d'une extrémité du conduit mobile 24, la mettant en face d'un des conduits de vidange 25, 25' ou d'un des conduits d'évacuation 26, 26', est obtenu à l'aide d'un dispositif de commande non représenté.

Tous les éléments sont maintenus ensemble grâce à un bâti non représenté sur lequel ils sont fixés de façon que la cuve 21 se trouve au-dessus des réservoirs 22, 22', des conduits de vidange 25, 25' et d'évacuation 26, 26'. Enfin des tôles de protection solidaires du bâti enferment tous les organes à l'intérieur du module.

Avec cette construction du module, le transfert d'un bain de traitement du réservoir 22 dans la cuve 21, la vanne de vidange 30 étant fermée, est réalisée par une circulation forcée du liquide grâce à la pompe 35. Un bain de rinçage, de son côté, est amené dans la cuve 21 par un conduit sous pression 27, par exemple une canalisation d'eau, son débit étant réglé par une vanne non représentée. Le retour du bain de traitement de la cuve 21 dans le réservoir 22 se fait, dans cette construction, par gravité, après avoir placé l'extrémité du conduit mobile 24 en face du conduit de vidange 25, la vanne de vidange 30 étant ouverte. De même le bain de rinçage est transféré par gravité dans le conduit d'évacuation 26 à l'aide du conduit mobile 24 placé dans une position adéquate. La circulation des bains entre la cuve 21 et le réservoir 22' ou les conduits de vidange 25', d'évacuation 26' et d'amenée 27', est identique à celle qui vient d'être décrite.

Durant les phases actives du processus, lorsque les pièces se trouvent dans une cuve, il est avantageux de faire circuler en permanence les bains qui quittent alors la cuve 21 par le conduit de trop-plein 31 pour rejoindre les conduits de vidange 25 et d'évacuation 26.

Des dispositions différentes des éléments les uns par rapport aux autres de celle décrite pourraient, bien entendu, être adoptées sans que ces variantes sortent du cadre de la présente invention. Par exemple la cuve 21 pourrait se trouver au même niveau ou même plus bas que les réservoirs 22, 22'. De même des pompes pourraient être utilisées dans tous les conduits pour accroître les débits. Le conduit mobile 24 pourrait aussi être remplacé par des conduits fixes, avec une vanne dans chaque conduit, reliant le fond de la cuve 21 aux conduits de vidange 25, 25' et d'évacuation 26, 26'.

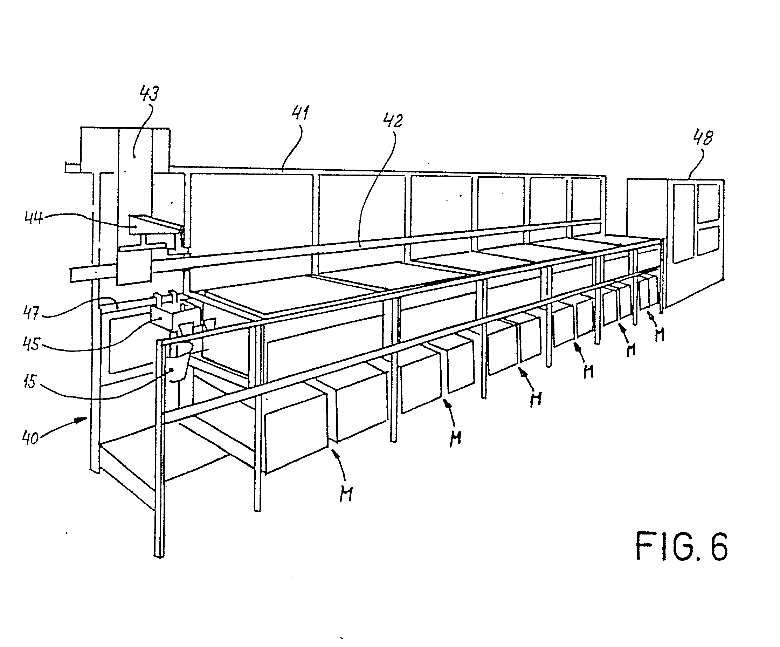

La fig. 6 montre une installation complète selon l'invention. Elle est composée, dans cet exemple, de six modules M précédemment décrits, tous identiques, sauf éventuellement en ce qui concerne le nombre de réservoirs 22, 22'. Un cadre 40, entourant et maintenant ensemble les modules M, supporte deux rails de guidage horizontaux 41 et 42 sur la partie arrière de l'installation, là où se trouvent les conduits de vidange 25 et d'évacuation 26 des modules. Sur ces rails, placés au-dessus des cuves 21 des modules M, peut se déplacer horizontalement un chariot 43 qui supporte un bras mobile 44 pouvant coulisser verticalement sur ce chariot. Le bras 44, dans sa position basse, peut saisir un support 45 auquel est fixé un dispositif précédemment décrit par les crochets 11 et dont seul le récipient 15 est visible. Bien entendu le support 45 contient toutes les amenées de courant nécessaires au fonctionnement du dispositif. Lorsque le support 45 n'est pas en prise avec le bras 44, il repose sur un rail d'accrochage horizontal 47 qui court, ainsi que les rails de guidage 41 et 42, le long de l'installation.

Les pièces sont placées dans le récipient 15 lorsqu'il se trouve dégagé, hors des modules, dans une position de changement prévue à cet effet sur le cadre 40. Une fois les pièces en place, le bras 44 peut élever le récipient 15 en venant occuper une position haute sur le chariot 43. Une translation de ce chariot le long des rails de guidage 41, 42 permet d'amener ce récipient 15 au dessus du module M choisi. La position du récipient 15, par rapport au support 45, est telle que le retour du bras 44 en position basse le place à l'endroit voulu à l'intérieur de la cuve 21 du module M. Le support 45 reste dans cette position, reposant sur le rail d'accrochage 47 en maintenant le moteur oscillant hors du bain de la cuve 21. Le bras 44 peut alors lâcher le support 45 et revenir dans sa position de départ pour saisir une autre dispositif, fixé à un support 45, qui aurait été chargé entretemps ou déplacer un dispositif d'une cuve dans une autre.

La circulation des bains dans les modules M, les déplacements du chariot 43 et du bras 44 sont obtenus par des dispositifs connus non représentés, commandés à partir d'une armoire de contrôle 48 de façon manuelle ou programmée, ce dernier mode de fonctionnement étant obtenu grâce à des dispositifs à mémoire, comme par exemple une bande perforée ou une bande magnétique.

## Revendications

1. Dispositif permettant de déplacer des pièces dans un récipient (15) ou bol sur une rampe inclinée à l'aide de vibration de rotation, communiquées au récipient par un moteur électromagnétique, comprenant: une plaque de base (1) avec des moyens de posage (2, 3), un noyau magnétique fixé à la plaque de base (1), une bobine (4) sur ce noyau magnétique, une deuxième plaque (7) associée avec le récipient (15), une armature magnétique (10) surportée par la deuxième plaque (7), des lames de ressort (8) ayant deux extrémités, fixées obliquement par une extrémité à la plaque de base (1) et par l'autre extrémité à la deuxième plaque (7) de façon qu'un entrefer soit ménagé entre lesdits noyaux magnétiques et ladite armature magnétique (10), des moyens de saisie (11) pour transporter le dispositif caractérisé en ce que la plaque de base (1) est en matériau magnétique ayant une face supérieure et une face inférieure, les moyens de posage (2, 3) sont fixés à ladite plaque de base (1), le dispositif comprenant plusieurs noyaux magnétiques fixés sur la face supérieure de la plaque de base (1) et une bobine (4) sur chacun desdits noyaux magnétiques, la deuxième plaque (7) ayant une face supérieure et une face inférieure se trouve au-dessus desdits noyaux magnétiques et supporte le récipient (15) à l'aide d'un axe (16), le récipient (15) étant disposé en dessous de la plaque de base (1), l'armature magnétique (10) est fixée sur la face inférieure de la deuxième plaque (7), les moyens de saisie (11) sont fixés à la deuxième plaque (7).

2. Dispositif selon la revendication 1, caractérisé en ce que lesdites bobines (4) sont réunies par groupes, chaque groupe étant électriquement indépendant desdits autres groupes.

3. Dispositif selon la revendication 2, caractérisé en ce que chacun desdits groupes de bobines est excité par un courant électrique différent.

4. Utilisation du dispositif selon la revendication 1 dans une installation de traitement de surface.

5. Utilisation selon la revendication 4, caractérisée en ce que ladite installation de traitement de surface comprend: une première et au mons une deuxième cuve (21), des moyens (44) pour transporter ledit dispositif d'une cuve (21) à une autre cuve (21), des réservoirs (22, 22') contenant des bains de traitement, des conduits de remplissage (23, 23') reliant lesdits réservoirs (22, 22') auxdites cuves (21), des moyens (35) pour créer une circulation desdits bains de traitement dans lesdits conduits de remplissage (23, 23'), des conduits de vidange (25, 25') reliant lesdites cuves (21) auxdits réservoirs (22, 22'), des moyens (30) pour créer une circulation desdits bains de traitement dans lesdits conduits de vidange (25, 25'), des conduits d'amenée (27, 27') de bains de rinçage dans lesdites cuves (21), des conduits d'évacuation (26, 26') desdits bains de rinçage hors desdites cuves (21), et des moyens pour créer une circulation desdits bains de rinçage dans lesdits conduits d'amenée (27, 27') et d'évacuation (26, 26').

## Patentansprüche

1. Vorrichtung zum Bewegen von Werkstücken in einem Behälter (15) oder einer Schale auf einer geneigten Rampe mit Hilfe von Drehschwingungen, die dem Behälter durch einen elektromagnetischen Motor erteilt werden, mit: einer Grundplatte (1) mit Aufstelleinrichtungen (2, 3), einem an der Grundplatte (1) befestigten Magnetkern, einer Spule (4) auf dem Magnetkern, einer zweiten, dem Behälter (15) zugeordneten Platte (7), einem von der zweiten Platte (7) getragenen Magnetanker (10), Federblättern (8), deren beide, schräg befestigte Enden einerseits an der Grundplatte (1) und anderseits an der zweiten Platte (8) derart befestigt sind, daß zwischen dem Magnetkern und dem Magnetanker (10) ein Luftspalt verbleibt, sowie mit Halteeinrichtungen (11) zum Transportieren der Vorrichtung, dadurch gekennzeichnet, daß die Grundplatte (1) aus magnetischem Material mit einer oberen und einer unteren Fläche besteht, die Aufstelleinrichtungen (2, 3) an der Grundplatte (1) befestigt sind, die Vorrichtung mehrere, an der oberen Fläche der Grundplatte (1) befestigte Magnetkerne und eine Spule (4) an jedem dieser Magnetkerne besitzt, die eine obere und eine untere Fläche aufweisende zweite Platte (7) sich oberhalb dieser Magnetkerne befindet und den Behälter (15) mit Hilfe einer Achse (16) trägt, wobei der Behälter (15) unterhalb der Grundplatte (1) angeordnet ist, der Magnetanker (10) an der unteren Fläche der zweiten Platte (7) befestigt ist, und die Halteeinrichtungen (11) an der zweiten Platte (7) fixiert sind.

2. Vorrichtung nach Anspruch 1, dadurch gekennzeichnet, daß die Spulen (4) gruppenweise zusammengeschaltet sind, wobei jede Gruppe elektrisch unabhängig von den anderen Gruppen ist.

3. Vorrichtung nach Anspruch 2, dadurch gekennzeichnet, daß jede der Spulengruppen durch einen unterschiedlichen elektrischen Strom erregt wird.

4. Verwendung der Vorrichtung nach Anspruch 1 in einer Anlage zur Oberflächenbehandlung.

5. Verwendung nach Anspruch 4, dadurch gekennzeichnet, daß die Anlage zur Oberflächenbehandlung mit einer ersten und mindestens einer zweiten Wanne (21) versehen ist, mit Transporteinrichtungen (44) für die Vorrichtung von einer Wanne (21) zur anderen Wanne (21), mit Vorratsbehältern (22, 22'), die Behandlungsbäder enthalten, mit Fülleitungen (23, 23'), die die Vorratsbehälter (22, 22') mit den Wannen (21) verbinden, mit Einrichtungen (35) zum Ausbilden einer Zirkulation der Behandlungsbäder in den Fülleitungen (23, 23'), mit Entleerungsleitungen (25, 25'), die die Wannen (21) mit den Vorratsbehältern (22, 22') verbinden, mit Einrichtungen (30) zum Ausbilden einer Zirkulation der Behandlungsbäder in den Entleerungsleitungen (25, 25'), mit Zulaufleitungen (27, 27') für Spülbäder zu den Wannen (21), mit Ablaufleitungen (26, 26') für die Spülbäder aus den Wannen (21) und mit Einrichtungen zum Ausbilden einer Zirkulation der Spülbäder in den Zulaufleitungen (27, 27') und in den Ablaufleitungen (26, 26').

## Claims

1. Device enabling workpieces to be moved in a receptacle (15) or bowl on an inclined ramp by means of rotary vibrations, imparted to the receptacle by an electromagnetic motor, comprising: a base plate (1) with support means (2, 3), a magnetic core fixed to the base plate (1), a coil (4) on this magnetic core, a second plate (7) associated with the receptacle (15), a magnetic armature (10) supported by the second plate (7), spring blades (8) having two ends, fixed obliquely by one end to the base plate (1) and by the other end to the second plate (8) in such a manner that an air gap is formed between said magnetic cores and said magnetic armature (10), gripping means (11) for transporting the device, characterized in that the base plate (1) is of magnetic material having an upper face and a lower face, the support means (2, 3) are fixed to said base plate (1), the device comprising several magnetic cores fixed to the upper face of the base plate (1) and a coil (4) on each of said magnetic cores, the second plate (7) having an upper face and a lower face is situated above said magnetic cores and supports the receptacle (15) by means of a shaft (16), the receptacle (15) being disposed below the base plate (1), the magnetic armature (10) is fixed to the lower face of the second plate (7), the gripping means (11) are fixed to the second plate (7).

2. Device according to claim 1, characterized in that said coils (4) are connected together by groups, each group being electrically independent of said other groups.

3. Device according to claim 2, characterized in that each of said groups of coils is excited by a different electrical current.

4. Use of the device according to claim 1 in a surface treatment installation.

5. Use according to claim 4, characterized in that said surface treatment installation comprises: a first and at least one second tank (21), means (44) for transporting said device from one tank (21) to another tank (21), reservoirs (22, 22') containing treatment baths, filling pipes (23, 23') connecting said reservoirs (22, 22') to said tanks (21), means (35) for creating a circulation of said treatment baths in said filling pipes (23, 23'), emptying pipes (25, 25') connecting said tanks (21) to said reservoirs (22, 22'), means (30) for creating a circulation of said treatment baths in said emptying pipes (25, 25'), supply pipes (27, 27') for rinsing baths into said tanks (21), discharge pipes (26, 26') for said rinsing baths from said tanks (21), and means for creating a circulation of said rinsing baths in said supply pipes (27, 27') and discharge pipes (26, 26').

FIG. 1

FIG. 2

M

25' 26' 26 25

35' 35

23' 23

24

30

27' 27

22' 22

31 21

FIG. 3

M

27' 27

21

23' 23

25' 24

26' 26 25

35' 35

22' 22

FIG. 4

M

27,27' 21

23,23'

24 30 31

35, 35'

25,25'

26,26'

22,22'

FIG.5

9

FIG. 6